# EUROPÄISCHE PATENTSCHRIFT

(11) **EP 0 994 068 B1**
(45) Veröffentlichungstag und Bekanntmachung des Hinweises auf die Patenterteilung: **23.10.2002**
(21) Anmeldenummer: 99118369.0
(22) Anmeldetag: 16.09.1999
(51) Int. Cl.: C01B 3/32

(54) **Verfahren zur Herstellung einer Vorrichtung zur Wasserstofferzeugung**
Process for preparing a device to produce hydrogen
Procédé pour la préparation d' un dispositif de génération d'hydrogène

(30) Priorität: 17.10.1998 DE 19847987
(43) Veröffentlichungstag der Anmeldung: 19.04.2000
(73) Patentinhaber: Ballard Power Systems AG, 73230 Kirchheim / Teck-Nabern (DE)
(72) Erfinder: Bachinger, Patrick, 73252 Lenningen (DE); Keppeler, Berthold, Dr., 73230 Kirchheim/Teck (DE); Lamla, Oskar, 73266 Bissingen a.d. Teck (DE); Schönrock, Bernd, 73277 Owen/Teck (DE); Schüssler, Martin, 89073 Ulm (DE); Waidelich, Dagmar, 71364 Winnenden-Hanweiler (DE)
(74) Vertreter: Kaufmann, Ursula Josefine, Dr.rer.nat. Dipl.-Phys.

(56) Entgegenhaltungen:
- EP-A- 0 906 890
- DE-C- 19 534 433
- US-A- 4 002 578
- US-A- 5 081 083

## Beschreibung

Die vorliegende Erfindung betrifft ein Verfahren zur Herstellung einer Vorrichtung zur Wasserstofferzeugung.

Die Erzeugung von Wasserstoff erfolgt insbesondere aus Kohlenwasserstoffen oder Alkohol, insbesondere Methanol, oder anderem chemisch gebundenem Wasserstoff. Die Gewinnung von Wasserstoff aus Methanol basiert auf der Gesamtreaktion CH₃OH + H₂O → CO₂ + 3H₂. Zur Durchführung dieser Reaktion wird in der Praxis ein den Kohlenwasserstoff und Wasserdampf umfassendes Reaktionsgemisch unter Zufuhr von Wärme an einem geeigneten Katalysator entlanggeleitet, um in einem ein- oder mehrstufigen Reaktionsablauf den gewünschten Wasserstoff zu erzeugen. Eine derartige Vorrichtung zur zweistufigen Methanol-Reformierung ist aus der EP 0 687 648 A1 bekannt. In der bekannten Vorrichtung wird das Reaktionsgemisch einem ersten.Reaktor zugeführt, in dem nur ein Teilumsatz des Methanols angestrebt wird. Nach dem Durchströmen des ersten Reaktors wird das Gasgemisch, in welchem noch Anteile nicht umgesetzter Edukte enthalten sind, einem zweiten Reaktor zugeleitet, der restumsatzoptimiert aufgebaut ist. Die Reaktoren sind dabei als Platten- bzw. Schüttreaktoren ausgeführt, in welchen der Katalysator in Form einer Schüttung oder Beschichtung der Verteilungskanäle vorgesehen ist. Des weiteren sind Katalysatoren in Form von beschichteten Blechen, Netzen und Schäumen bekannt, die von dem Reaktionsgemisch durchströmt werden.

Aus der DE 197 43 673 A1 der gleichen Anmelderin ist eine Vorrichtung zur Wasserstofferzeugung bekannt, die mindestens eine durch Verpressen von Katalysatormaterial gebildete dünne und großflächige Katalysatorschicht umfaßt, durch die ein Methanol und Wasser umfassendes Reaktionsgemisch unter Druckabfall hindurchpreßbar ist. Die in dieser Vorrichtung Verwendung findende Katalysatorschicht weist eine netzartige Trägerstruktur aus insbesondere dendritischem Kupfer auf, in der katalytisch aktive Bestandteile gehalten sind. Zur Herstellung einer derartigen Katalysatorschicht wird ein Katalysatorpulver, dem ein Metallpulver aus dendritischem Kupfer beigemischt ist, verpreßt und anschließend gesintert.

Aus der DE-OS 23 15 799 ist ein Katalysator bekannt, der aus einem feuerfesten Material, beispielsweise Aluminiumoxid, Mullid, Schamotte oder Magnesiumoxid, besteht, das mit Kupfer, Kupferoxid oder Kupfernitrat imprägniert ist oder mit einem äußerst dünnen Film aus Kupfer, Kupferoxid oder Kupfernitrat auf seine Oberfläche oder auf der inneren Oberfläche seiner Posen überzogen ist. Aus der EP 0 217 532 A1 ist ein weiterer Katalysator mit ähnlichem Aufbau bekannt, bei dem das Katalysatormaterial aus Kupfer auf einem feuerfesten Trägermaterial aufgebracht ist, das in Granulatform vorliegt.

Aus der WO 96/32188 ist ein Reaktorsystem zur Durchführung zweier chemischer Reaktionen bekannt, das mindestens zwei separate, jedoch in Wärmetauschkontakt stehende Reaktorbetten aufweist, deren den Reaktanten der in den Reaktorbetten ablaufenden chemischen Reaktionen ausgesetzten Oberflächen katalytisch aktiv sind. Die katalytisch aktive Oberfläche der Reaktorbetten besteht beispielsweise aus gesinterten Metallteilchen mit einer geringen Teilchengrößeverteilung. Das Material der gesinterten Teilchen ist dabei ein Metall oder eine Metallegierung, das bzw. die selbst katalytisch aktiv sein kann. Eine weitere Möglichkeit der Ausgestaltung des bekannten Reaktors ist ein Plattenreaktor, der auf Basis einer mehr oder weniger flachen Platte aufgebaut ist, auf der wiederum eine ge-Wellte Platte aufgeschweißt ist. Diese Anordnung wird aufgerollt und an den Enden miteinander verschweißt.

Ausgehend hiervon liegt der Erfindung die Aufgabe zugrunde, ein Verfahren zur Herstellung einer Vorrichtung zur Wasserstofferzeugung mit möglichst niedrigen Herstellungs- und Materialkosten zu schaffen. Eine Reaktivierung des Katalysators bei nachlassender Aktivität wäre wünschenswert.

Zur Lösung dieser Aufgabe wird erfindungsgemäß ein Verfahren zur Herstellung einer Vorrichtung zur Wasserstofferzeugung mit den Merkmalen des Anspruches 1 vorgeschlagen. Demnach wird zur Herstellung einer Vorrichtung zur Wasserstofferzeugung, die mindestens eine dünne und großflächige Katalysatorschicht umfaßt, zuerst ein Kupferpulver aus insbesondere dendritischem Kupfer zu einer einen Formkörper bildenden dünnen und stark komprimierten Schicht verpreßt. Dieser Formkörper wird daraufhin in reduzierender Atmosphäre gesintert, so daß in dem Formkörper eine netzartige Trägerstruktur aus Kupfer entsteht. Im Anschluß an das Sintern wird eine Oberflächenschicht des Formkörpers zur Bildung der dünnen und großflächigen Katalysator schicht aktiviert. Mit dem erfindungsgemäßen Verfahren wird somit eine Katalysatorschicht aus einem Kupferpulver hergestellt, das keinen zusätzlichen Pulveranteil aus katalytisch aktivem Material beinhaltet. Dies ermöglicht ein Sintern bei ausreichend hohen Temperaturen, die die Ausbildung einer netzartigen Trägerstruktur in dem Kupfer-Formkörper gestatten. Bei einem durch Verpressen eines Pulvergemisches aus Kupfer und katalytisch aktivem Material gebildeten Formkörper sind die Sintertemperaturen auf Temperaturen von maximal 600°C beschränkt, da ansonsten eine Beeinträchtigung des aktiven Materials erfolgt. Durch Sintern bei noch höheren Temperaturen wird jedoch eine sehr gute Wärmeleitfähigkeit gewährleistet. Des weiteren liegt dadurch eine deutlich verbesserte mechanische Stabilität vor. Da der durch das Sintern entstandene Formkörper außer dem Kupfer kein katalytisch aktives Material enthält, wird der Formkörper zur Verbesserung der katalytischen Aktivität erfindungsgemäß an einer Oberflächenschicht aktiviert, so daß die mindestens eine dünne und großflächige Katalysatorschicht für die Vorrichtung zur Wasserstofferzeugung entsteht. Bei der Aktivierung ist darauf zu achten, daß die netzartige Trägerstruktur zumindest im Kern des Formkörpers nicht beeinträchtigt wird, um die erzielte mechanische Stabilität und Wärmeleitfähigkeit zu bewahren.

In Ausgestaltung der Erfindung erfolgt das Aktivieren durch insbesondere mehrmaliges Oxidieren und Reduzieren der Oberfläche des Formkörpers. Vorteilhafterweise wird der Vorgang des Oxidierens und Reduzierens so oft wiederholt, bis eine Oberflächenschicht gewünschter Dicke aktiviert ist.

In besonders vorteilhafter Ausgestaltung der Erfindung enthält das Kupferpulver ausschließlich dendritisches Kupfer, wodurch eine besonders gut ausgebildete netzartige Trägerstruktur in dem Formkörper nach dem Verpressen erzielt wird.

In anderer Ausgestaltung der Erfindung ist dem Kupferpulver ein katalytisch nicht aktiver Bestandteil beigemischt, der zum Aktivieren einer Oberflächenschicht des Formkörpers aus dem Kupfernetzwerk des Formkörpers herausgelöst wird. Durch das Herauslösen des katalytisch nicht aktiven Bestandteils aus der netzartigen Trägerstruktur wird die Kupferoberfläche des Formkörpers vergrößert, so daß die katalytische Aktivität des Kupfers erhöht wird. Dieses Herauslösen eines nicht aktiven Bestandteils ist als sogenannter Raney-Prozeß bekannt.

Vorteilhafterweise ist der katalytisch nicht aktive Bestandteil Aluminium.

Erfindungsgemäß wird somit durch Verpressen eines Kupferpulvers ein dünner und stark komprimierter Formkörper erstellt. Die Porösität des Formkörpers wird durch den Preßdruck eingestellt. Der derart erhaltene Kupfer-Formkörper wird in reduzierender Atmosphäre bei einer ausreichend hohen Temperatur gesintert, so daß durch Vernetzung der Kupferpartikel in'dem Formkörper eine netzartige Trägerstruktur aus Kupfer entsteht. Die Sintertemperatur beträgt vorteilhafterweise mehr als 600°C, vorzugsweise mehr als 700°C.

Nach dem Sintern des gepreßten Formkörpers erfolgt eine Aktivierung, um die katalytische Aktivität des Kupferkörpers zu erhöhen.

Im Falle der Verwendung eines reinen Kupferpulvers, d.h. eines Pulvers, das ausschließlich aus Kupfer bzw. dendritischem Kupfer besteht, erfolgt die Aktivierung durch wiederholtes Oxidieren und Reduzieren des Formkörpers. Der Vorgang des Oxidierens und Reduzierens wird dabei so oft wiederholt, bis eine Oberflächenschicht des Formkörpers in gewünschter Dicke aktiviert ist.

Das Oxidieren erfolgt in Sauerstoff- bzw. Luftumgebung bei erhöhter Temperatur, das Reduzieren beispielsweise in einer Wasserstoffatmosphäre.

Im Falle der Verwendung eines Kupferpulvers, dem ein katalytisch nicht aktiver Bestandteil beigemischt ist, beispielsweise Aluminium, wird der nicht aktive Bestandteil aus dem Kupferkörper herausgelöst. Diese Extraktion des nicht aktiven Bestandteils erfolgt beispielsweise durch ein Lösungsmittel, das das Kupfer nicht angreift. Durch das Herauslösen entsteht eine im mikroskopischen Bereich zerklüftete Oberfläche des Formkörpers, wodurch die katalytisch wirksame Außenfläche des Kupferkörpers vergrößert wird.

Bei der Aktivierung des Kupferkörpers zur Bildung einer in einer Vorrichtung zur Wasserstofferzeugung einzusetzenden Katalysatorschicht ist zu beachten, daß der Kern der Katalysatorschicht, d.h. der innere Bereich der netzartigen Trägerstruktur, nicht beeinträchtigt wird, um die Wärmeleitfähigkeit und die mechanische Stabilität nicht zu beeinträchtigen.

Die erfindungsgemäß hergestellte Katalysatorschicht weist einen sehr homogenen Aufbau auf, der aufgrund der verästelten, engmaschigen netzartigen Trägerstruktur eine sehr gute Wärmeleitfähigkeit aufweist. Dies wirkt sich insbesondere vorteilhaft auf die Wärmeabfuhr bzw. -zufuhr bei einer nicht-autothermen Katalysereaktion aus und erleichtert den Ausgleich der Wärmebilanz und somit die Durchführung einer autothermen Methanol-Reformierung.

Aufgrund der durch die netzartige Trägerstruktur verbesserten mechanischen Stabilität eignet sich die Katalysatorschicht zum Einsatz in mobilen Vorrichtungen zur Wasserstofferzeugung.

Durch Übereinanderstapeln mehrerer Katalysatorschichten kann ein sogenannter Stapelreaktor zur Wasserstofferzeugung hergestellt werden.

## Patentansprüche

1. Verfahren zur Herstellung einer dünnen und großflächigen Katalysatorschicht für die Verwendung in der Wasserstofferzeugung, durch die ein Reaktionsgemisch unter Druckabfall hindurchpreßbar ist, mit den folgenden Schritten:
- Verpressen eines Kupferpulvers aus insbesondere dendritischem Kupfer zu einer einen Formkörper bildenden dünnen und stark komprimierten Schicht,
- Sintern des Formkörpers in reduzierender Atmosphäre, so daß in dem Formkörper eine netzartige Trägerstruktur aus Kupfer entsteht,
- Aktivieren einer Oberflächenschicht des Formkörpers zur Bildung der dünnen und großflächigen Katalysatorschicht.

2. Verfahren nach Anspruch 1, **dadurch gekennzeichnet, daß** das Aktivieren durch mehrmaliges Oxidieren und Reduzieren der Oberfläche des Formkörpers erfolgt.

3. Verfahren nach Anspruch 2, **dadurch gekennzeichnet, daß** der Vorgang des Oxidierens und Reduzierens so oft wiederholt wird, bis eine Oberflächenschicht gewünschter Dicke aktiviert ist.

4. Verfahren nach einem der Ansprüche 1 bis 3, **dadurch gekennzeichnet, daß** das Kupferpulver ausschließlich dendritisches Kupfer enthält.

5. Verfahren nach Anspruch 1, **dadurch gekennzeichnet, daß** dem Kupferpulver ein katalytisch nicht aktiver Bestandteil beigemischt ist, der zum Aktivieren einer Oberflächenschicht des Formkörpers aus dem Kupfernetzwerk des Formkörpers herausgelöst wird.

6. Verfahren nach Anspruch 5, **dadurch gekennzeichnet, daß** der katalytisch nicht aktive Bestandteil Aluminium ist.

## Claims

1. Process for producing a thin, large-area catalytic layer for use in producing hydrogen, through which a reaction mixture can be forced under the influence of a pressure-drop, having the following stages:
- extrusion of a copper powder of, in particular, dendritic copper, producing a thin and greatly compressed body form,
- sintering of the body form in reducing air, such that a netlike, copper, support structure arises in the body form,
- activation of a surface layer of the body form, to produce the thin, large-area, catalytic layer.

2. Process in accordance with claim 1, **characterized in that** activation occurs through repeated oxidation and reduction of the surface of the body form.

3. Process in accordance with claim 2, **characterized in that** the process of oxidation and reduction is repeated until a surface layer of the required thickness has been activated.

4. Process in accordance with one of claims 1 to 3, **characterized in that** the copper powder contains exclusively dendritic copper.

5. Process in accordance with claim 1, **characterized in that** the copper powder has a catalytically inactive component, which is dissolved out in order to activate a surface layer, added to it.

6. Process in accordance with claim 5, **characterized in that** the catalytically inactive component is aluminium.

## Revendications

1. Procédé de fabrication d'une couche de catalyseur mince et à grande surface destinée à être utilisée dans la production d'hydrogène, à travers laquelle un mélange réactionnel peut être forcé sous une perte de charge, comportant les étapes suivantes :
- compactage d'une poudre de cuivre constituée en particulier par du cuivre dendritique en une couche comprimée mince et résistante formant un corps mis en forme,
- frittage du corps mis en forme dans une atmosphère réductrice de sorte qu'il apparaît dans le corps mis en forme une structure de support en réseau constituée par du cuivre,
- activation d'une couche superficielle du corps mis en forme pour la formation de la couche de catalyseur mince et à grande surface.

2. Procédé selon la revendication 1, **caractérisé en ce que** l'activation a lieu par oxydation et réduction répétées de la surface du corps mis en forme.

3. Procédé selon la revendication 2, **caractérisé en ce que** le processus d'oxydation et de réduction est répété jusqu'à ce qu'une couche superficielle d'épaisseur souhaitée soit activée.

4. Procédé selon l'une des revendications 1 à 3, **caractérisé en ce que** la poudre de cuivre contient exclusivement du cuivre dendritique.

5. Procédé selon la revendication 1, **caractérisé en ce que**, dans la poudre de cuivre, est incorporé un constituant non actif du point de vue catalytique qui, pour l'activation d'une couche superficielle du corps mis en forme, est extrait du réseau de cuivre du corps mis en forme par dissolution.

6. Procédé selon la revendication 5, **caractérisé en ce que** le constituant non actif du point de vue catalytique est l'aluminium.
